Europäisches Patentamt

European Patent Office

Office européen des brevets

Publication number: **0 289 179**
**A2**

## EUROPEAN PATENT APPLICATION

Application number: **88303447.2**

Date of filing: **15.04.88**

Int. Cl.⁴ **C12C 11/04 , C12G 1/02**

Priority: **28.04.87 GB 8710046**

Date of publication of application:
**02.11.88 Bulletin 88/44**

Designated Contracting States:
**AT BE CH DE ES FR GB GR IT LI LU NL SE**

Applicant: **SODASTREAM LIMITED**
**Morley Way·**
**Woodston, Peterborough, PE2 OBS(GB)**

Inventor: **Ison, Renny Webster**
**32, Francis Street**
**Reading, Berkshire RG1 2QB(GB)**

Representative: **Spencer, Graham Easdale et al**
**A.A. Thornton & CO Northumberland House**
**303-306, High Holborn**
**London WC1V 7LE(GB)**

Method of carrying out yeast fermentations.

In the production of alcoholic beverages by the yeast fermentation of suitable substrates, the fermentation is carried out in two stages, in the first of which from 10 to 75% by volume of the total amount of water is present and which is continued until an active, substantially pure pitching yeast fermentation is taking place, and the fermentation mixture is then mixed with the balance of the water for the second stage.

EP 0 289 179 A2

## Method of carrying out yeast fermentations

This invention is concerned with the yeast fermentation of suitable substrates to produce alcoholic beverages, such as beer and wine. and more particularly with small scale fermentations as carried out in the home.

In the following description, reference will largely be made to the production of beer, but the particular matters with which the present invention is concerned, that is the suppression of the effects of wild yeasts and contaminating bacteria and the avoidance of long delays in the initiation of an active fermentation, equally arise in the production of other fermented beverages, such as wine, cider and perry, and the present invention is equally applicable to such other fermented beverages.

In home brewing, the fermentation ingredients other than water are usually supplied in kit form. The yeast (pitching yeast) is usually in dried form and may be supplied in admixture with the fermentation substrate, or more usually, separate therefrom. Whether the brewing process involves adding these ingredients to a given amount of water or, on the contrary, adding a given amount of water to these ingredients in a one-time use fermentation container (as described, for example, in our European Patent 71365), it is frequently found that there is a delay in the onset of an active fermentation. As long as active yeast growth is not taking place there is a risk of the fermentation being affected by wild yeasts or contaminating bacteria. The latter, in particular, can degrade the quality of the product obtained or, in the worst case, prevent proper development of the pitching yeast so that the correct fermentation does not take place. If, on the other hand, active growth of the pitching yeast occurs with little or no delay, it inhibits and normally kills wild yeast and contaminating bacteria.

We have found that the effect of wild yeast and contaminating bacteria on yeast fermentations, particularly small scale home fermentations, can be reduced or avoided by carrying out the fermentation in two stages, in the first of which only part of the total amount of water is present, and in the second of which, initiated after active fermentation is taking place, the remainder of the water is present.

According to the present invention, therefore, there is provided a method of carrying out the yeast fermentation of a suitable substrate to produce an alcoholic beverage, in which the fermentation is carried out in two stages, in the first of which from 10 to 75%, preferably from 20 to 40%, by volume of the total amount of water is present and which is continued until an active, substantially pure pitching yeast fermentation is taking place, and the fermentation mixture is then mixed with the balance of the water for the second stage.

The first stage of the process is. in general, continued for 18 hours to 7 days and preferably for 24 to 72 hours. In relation to the time taken to complete the fermentation which, in home brewing, is typically 7 to 14 days, the first stage of the process according to the invention should constitute only a minor part of the whole process. The first stage is preferably not continued beyond the point at which an active pitching yeast fermentation is established; it is not continued until the yeast has become significantly inactivated by alcohol production.

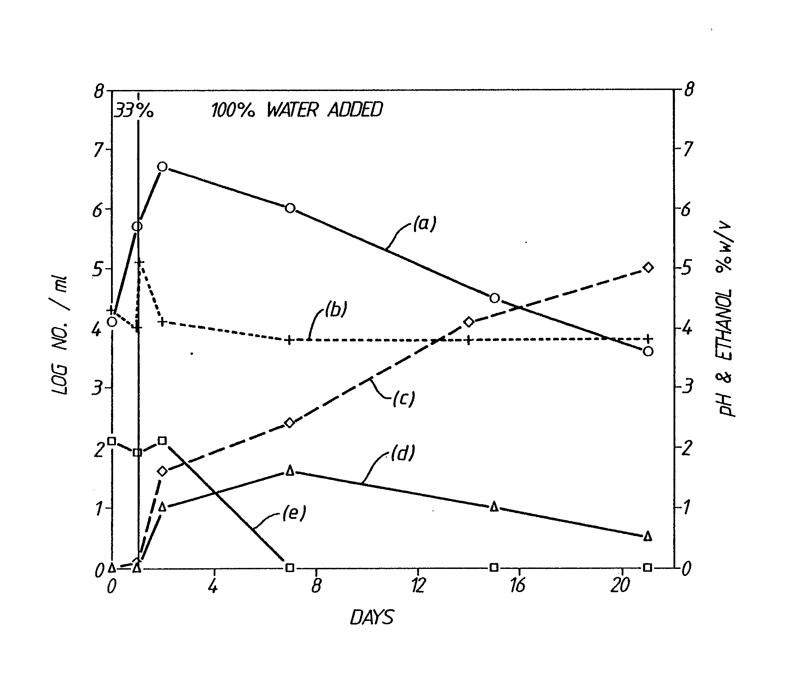

A typical fermentation with two stage water addition in accordance with the invention is shown in the single figure of the accompanying drawing.

The figure shows the following curves, (a) pitching yeast concentration, (b) pH. (c) ethanol concentration, (d) wild yeast concentration, and (e) bacteria concentration, all plotted as a function of time, in days. The concentrations of curves (a), (d) and (e) are expressed as log no./ml and shown in the left hand ordinate scale; the pH of curve (b) and the ethanol concentration of curve (c), expressed as percentage w/v, are shown in the right hand ordinate scale. The fermentation was commenced with 33% by volume of the total water and after 1 day, the balance of the total water was added. It will be seen from the curves that the pitching yeast concentration greatly increased in the first stage, the pH slightly dropped (and increased on the addition of the balance of the water), the bacterial concentration slightly dropped, there was no significant wild yeast present nor any significant production of alcohol.

Following the addition of the balance of the water, the pitching yeast concentration increased to a peak after 2 days and then gradually fell. The pH dropped rapidly to a value of 4 and remained at or just below this value for the remainder of the process. At no stage during the fermentation was there significant growth by either wild yeast or bacteria; the bacteria were all dead by day 7. The alcohol concentration increased steadily to a final value of 5% w/v.

It must be understood that these features will not be repeated exactly in every fermentation according to the invention.

Apart from the two stage water addition, the fermentation is in all other respects carried out in a conventional manner, that is to say using materials and methods appropriate to the type of fermented beverage required. Thus both the first and second stages are carried out at temperatures appropriate to the pitching yeast used. Suitable temperatures for ale and wine fermentations are generally from 15° to 25°C; lager fermentations are usually carried out at somewhat lower temperatures, typically from 13° to 18°C.

Whilst the two stage water addition according to the invention can be used with benefit for any home brewing procedure in which all the ingredients (other than water) are added to water or water is added to them, it is particularly suitable for use with one-time use fermentation containers as described in the above-mentioned European patent.

## Claims

1. A method of carrying out the yeast fermentation of a suitable substrate to produce an alcoholic beverage, in which the fermentation is carried out in two stages, in the first of which from 10 to 75% by volume of the total amount of water is present and which is continued until an active, substantially pure pitching yeast fermentation is taking place, and the fermentation mixture is then mixed with the balance of the water for the second stage.

2. A method according to claim 1, in which from 20 to 40% by volume of the total amount of water is present in the first stage.

3. A method according to claim 1 or 2, in which the first stage is continued for 18 hours to 7 days.

4. A method according to claim 1 or 2, in which the first stage is continued for 24 to 72 hours.

5. A method according to any of claims 1 to 4, which is carried out in a one-time use fermentation container.

PH & ETHANOL %w/v

100% WATER ADDED

(a)

(b)

(c)

(d)

(e)

33%

DAYS

LOG NO. / ml